(19) **Europäisches Patentamt**
**European Patent Office**
**Office européen des brevets**

(11) **EP 1 466 146 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **03700005.6**

(22) Anmeldetag: **09.01.2003**

(51) Int Cl.:
***G01F 1/698*** *(2006.01)*

(86) Internationale Anmeldenummer:
**PCT/CH2003/000005**

(87) Internationale Veröffentlichungsnummer:
**WO 2003/058178 (17.07.2003 Gazette 2003/29)**

(54) **VERFAHREN ZUR THERMISCHEN DURCHFLUSSMESSUNG MIT NICHT KONSTANTEN HEIZPULSEN**

METHOD FOR THERMAL FLOW MEASUREMENT WITH NON CONSTANT HEATING PULSES

PROCEDE DE MESURE THERMIQUE D'UN DEBIT A L'AIDE D'IMPULSIONS DE CHAUFFE NON CONSTANTES

(84) Benannte Vertragsstaaten:
**AT BE BG CH CY CZ DE DK EE ES FI FR GB GR HU IE IT LI LU MC NL PT SE SI SK TR**

(30) Priorität: **14.01.2002 EP 02000767**

(43) Veröffentlichungstag der Anmeldung:
**13.10.2004 Patentblatt 2004/42**

(73) Patentinhaber: **ABB Research Ltd.**
**8050 Zürich (CH)**

(72) Erfinder:
• **LUCHSINGER, Rolf**
**CH-8610 Uster (CH)**

• **MATTER, Daniel**
**CH-5200 Brugg (CH)**
• **PRÊTRE, Philippe**
**CH-5405 Baden-Dättwil (CH)**
• **KLEINER, Thomas**
**CH-5442 Fislisbach (CH)**

(74) Vertreter: **Marks, Frank**
**C/o ABB AG, GF-IP**
**Oberhausener Str. 33**
**40472 Ratingen (DE)**

(56) Entgegenhaltungen:
**EP-A- 0 698 786**

**Beschreibung**

**TECHNISCHES GEBIET**

Die vorliegende Erfindung bezieht sich auf das Gebiet der Messung von Gas- oder Flüssigkeitsströmungen mit thermischen Sensoren. Sie geht aus von einem Verfahren und einem Sensor zur Massenflussmessung gemäss Oberbegriff der unabhängigen Ansprüche.

**STAND DER TECHNIK**

In dem U. S. Pat. No. 4,501,145 werden eine gattungsgemässe Methode und Vorrichtung zur thermischen Flussgeschwindigkeitsmessung offenbart. Dabei wird ein Sensor mit einem Heizpuls konstanter Leistung erwärmt, mindestens eine Anstiegszeit bis zum Erreichen einer, vorgegebenen Temperaturschwelle gemessen und daraus ein vom Wärmeübergangskoeffizienten abhängiger Fluidparameter wie z. B. die Flussgeschwindigkeit gemessen. Nachteilig ist, dass der Temperaturanstieg mit zunehmender Flussgeschwindigkeit immer undifferenzierter ausfällt und in eine Sättigung kommt, so dass eine ausreichende Messempfindlichkeit nur in einem eingeschränkten Messbereich von Flussgeschwindigkeiten erreicht wird. Zudem müssen die Heizleistung und die Temperaturschwelle sorgfältig aufeinander und auf den gewünschten Flussgeschwindigkeits-Messbereich abgestimmt werden.

In der EP 0 180 974 werden ein Verfahren und eine Einrichtung zur Messung von Strömungsgeschwindigkeiten oder Massenflüssen dargestellt. Dabei werden bei konstanter Heizleistung für die instationären Sondentemperaturverläufe strömungsabhängige Kennlinienfelder bestimmt und auf die Flussgeschwindigkeit geschlossen, indem Temperaturen zu vorgegebenen Zeitpunkten oder Zeitintervalle bis zum Erreichen vorgegebener Temperaturschwellwerte gemessen werden. Nachteilig ist, dass der Flussgeschwindigkeits-Messbereich aufgrund der wiederum abnehmenden Temperaturauflösung bei hohen Flussgeschwindigkeiten auf die auswertefähigen Bereiche der Kennlinienfelder beschränkt ist.

In der EP 0698786 werden weiterhin ein Verfahren und eine Einrichtung zur-Messung von Massenflüssen dargestellt.

**DARSTELLUNG DER ERFINDUNG**

Aufgabe der vorliegenden Erfindung ist es, ein Verfahren und eine Vorrichtung zur gepulsten Massenflussmessung mit einer verbesserten Messempfindlichkeit in einem vergrösserten Messbereich anzugeben. Diese Aufgabe wird erfindungsgemäss durch die Merkmale der unabhängigen Ansprüche gelöst.

In einem ersten Aspekt besteht die Erfindung in einem Verfahren zum Messen einer Flussgeschwindigkeit oder eines Massenflusses eines Fluids, insbesondere zum Messen von Heisswasserbezug im privaten, öffentlichen oder industriellen Bereich, bei welchem das Fluid über ein Sensorelement geführt wird, welches ein Heizmittel zur Temperaturänderung und ein Sensormittel zur Bestimmung seiner Temperatur aufweist, wobei mindestens zeitweise das Heizmittel mit einer Heizleistung in Form von Heizpulsen betrieben wird und eine strömungsabhängige Schwellwertzeit bis zum Erreichen eines vorgegebenen Temperaturschwellwerts am Sensormittel gemessen wird, wobei während zumindest einiger der Heizpulse eine nichtkonstante Heizleistung mit einem im wesentlichen sublinearen Anstiegsverhalten als Funktion der Zeit zur zumindest teilweisen Kompensation eines nichtlinearen Verhaltens der Schwellwertzeit als Funktion der Flussgeschwindigkeit gewählt wird. Ein sublineares Anstiegsverhalten bedeutet, dass während eines Heizpulses die Heizleistung eine Funktion der Zeit mit einer monoton abnehmenden ersten Zeitableitung ist. Im wesentlichen sublinear bedeutet, dass kurzfristige Abweichungen hiervon, z. B. eine kurzfristige zunehmende Zeitableitung, tolerabel ist, sofern das Anstiegsverhalten global, d. h. bei Bildung abschnittsweiser Mittelwerte über den gesamten Heizpuls, sublinear bleibt und eine von Abschnitt zu Abschnitt abnehmende erste Zeitableitung aufweist. Eine solcherart abflachende Zunahme der Heizpulsleistung führt zu dem gewünschten Effekt, dass sowohl niedrige als auch hohe Flussgeschwindigkeiten mit einer grossen Genauigkeit und zugleich relativ kurzen Messdauer bestimmt werden können. Mit dem Verfahren kann also der Messbereich erweitert, die Messgenauigkeit erhöht, die Messzeit verkürzt und bei Bedarf die Messrepetitionsrate erhöht werden. Darüberhinaus ist eine Anpassung der Heizleistung an die Temperaturschwelle oder den Flussgeschwindigkeits-Messbereich nicht erforderlich oder unkritisch, da die Temperaturschwelle in jedem Fall wegen der Zunahme der Heizleistung erreicht wird.

In einem ersten Ausführungsbeispiel wird das Anstiegsverhalten als Funktion der Zeit und gegebenenfalls der zu messenden Flussgeschwindigkeit selber so variiert, dass die Schwellwertzeit zumindest näherungsweise, d. h. insbesondere zumindest an diskreten Flussgeschwindigkeitswerten, eine lineare Funktion der Flussgeschwindigkeit ist. Durch die Linearität wird eine über den gesamten Flussgeschwindigkeits-Messbereich im wesentlichen gleichbleibende Messempfindlichkeit erreicht. Dabei sind kleinere lokale Abweichungen von der Linearität tolerabel. Die lineare Messcharakteristik wird gegebenenfalls zumindest punktweise über den gesamten Messbereich dadurch erreicht, dass für unterschiedliche Flussgeschwindigkeits-Teilmessbereiche ein angepasstes Anstiegsverhalten der Heizpulsleistung verwendet wird.

Im Ausführungsbeispiel gemäss Anspruch 4 wird ein solches angepasstes Anstiegsverhalten durch den flussgeschwindigkeitsabhängigen Amplitudenfaktor erreicht. Dadurch wird eine lineare Charakteristik der Schwellwertzeit als Funktion der Flussgeschwindigkeit zumindest punktweise und unabhängig vom ersten thermischen Übergangswiderstand zwischen Heizmittel und Sensorelement-Oberfläche realisiert.

Das Ausführungsbeispiel gemäss Anspruch 3 hat den Vorteil einer besonders einfachen und einfach implementierbaren Zeitabhängigkeit des Anstiegsverhaltens der Heizleistung. Diese Zeitabhängigkeit ist insbesondere zur um so besseren Linearisierung der Schwellwertzeit als Funktion der Flussgeschwindigkeit geeignet, je kleiner der erste thermische Übergangswiderstand gewählt wird.

Das Ausführungsbeispiel gemäss Anspruch 5 hat den Vorteil, dass für eine einfache zylindrische Form des Sensorelements eine exakte Strömungsabhängigkeit des zweiten thermischen Übergangswiderstands angegeben werden kann.

Die Ausführungsbeispiele gemäss Ansprüchen 6 und 7 haben den Vorteil, dass das implizite Probleme der Abhängigkeit der Heizleistung von der zu messenden Grösse einfach und zuverlässig durch vorgängig bestimmte Kalibrationskurven und durch Abschätzung oder a priori Kenntnis der mutmasslichen Flussgeschwindigkeit gelöst wird.

Das Ausführungsbeispiel gemäss Anspruch 8 hat den Vorteil, dass bei vernachlässigbarem ersten thermischen Übergangswiderstand der lineare Zusammenhang zwischen Schwellwertzeit und Flussgeschwindigkeit über den gesamten Flussgeschwindigkeits-Messbereich gültig und exakt berechenbar ist.

In einem zweiten Aspekt besteht die Erfindung in einem Massenflusssensor zum Ermitteln einer Flussgeschwindigkeit oder eines Massenflusses eines Fluids gemäss dem zuvor beschriebenen Verfahren. Der Sensor umfasst ein Sensorelement mit einem Heizmittel und einem Sensormittel zur thermischen Messung in einem Fluid und eine Steuer- und Auswerteeinheit mit einer Heizungssteuerung zur Erzeugung von Heizpulsen für das Heizmittel und einer Messeinrichtung zur Auswertung der thermischen Messung und zur Bestimmung einer Flussgeschwindigkeit oder eines Massenflusses aus einer strömungsabhängigen Schwellwertzeit bis zum Erreichen eines vorgegebenen Temperaturschwellwerts am Sensormittel, wobei die Heizungssteuerung Mittel zur Erzeugung einer nichtkonstanten Heizleistung mit einem im wesentlichen sublinearen Anstiegsverhalten als Funktion der Zeit umfasst und die Steuer- und Auswerteeinheit Mittel zur zumindest teilweisen Kompensation eines nichtlinearen Verhaltens der Schwellwertzeit als Funktion der Flussgeschwindigkeit aufweist.

Die Ausführungsbeispiele gemäss Ansprüchen 10 und 11 haben den Vorteil einer besonders einfachen und genauen Sensorsteuerung und Messwerterfassung.

Weitere Ausführungen, Vorteile und Anwendungen der Erfindung ergeben sich aus abhängigen Ansprüchen sowie aus der nun folgenden Beschreibung und den Figuren.

## KURZE BESCHREIBUNG DER ZEICHNUNG

Es zeigen:

Fig. 1 im Querschnitt ein durchströmtes Rohr oder ei- nen Strömungskanal mit einem erfindungsgemässsen Massenflusssensor für einen Betrieb mit nicht rechteckförmigen Heizpulsen;

Fig. 2a, 2b, 2c, 2d einen gepulsten Betrieb eines Massen- flusssensors mit rechteckförmigen Heizpulsen gemäss Stand der Technik;

Fig. 3a, 3b, 3c einen gepulsten Betrieb eines Massenfluss- sensors mit erfindungsgemässen, nicht recht- eckförmigen Heizpulsen; und

Fig. 4 eine Schar von Kalibrationskurven der Schwell- wertzeit als Funktion der Flussgeschwindigkeit für drei strömungsabhängige Heizleistungen.

In den Figuren sind gleiche Teile mit gleichen Bezugszeichen versehen.

## WEGE ZUR AUSFÜHRUNG DER ERFINDUNG

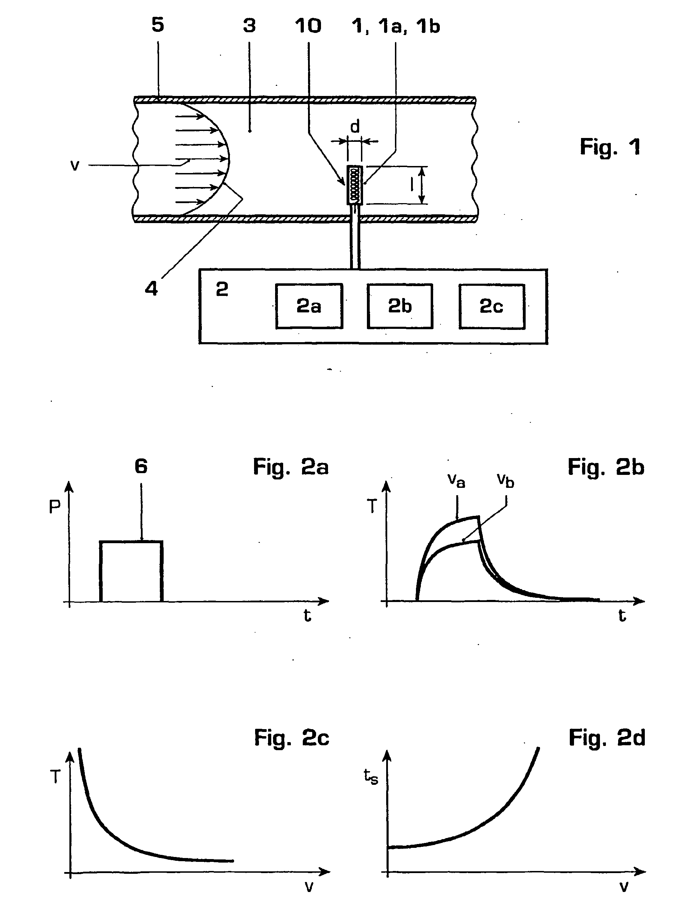

Fig. 1 zeigt einen thermischen Massenflusssensor 1, 2, der ein in einem Strömungskanal oder Rohr 4 angeordnetes Sensorelement 1 und eine Steuer- und Auswerteeinheit 2 umfasst. Im Rohr 4 strömt ein Fluid 3, z. B. eine Flüssigkeit 3 oder ein Gas 3, mit einem Strömungs- oder Geschwindigkeitsprofil 5. Das Sensorelement 1 ist einer zu messenden Strömungsgeschwindigkeit v ausgesetzt. Das Sensorelement 1 weist ein Heizmittel 1a zur Temperaturänderung und ein Sensormittel 1b zur Bestimmung seiner Temperatur auf.

Gemäss Fig. 2a-2d ist es bekannt, das Heizmittel 1a mit einer Heizleistung P in Form konstanter Heizpulse 6 zu betreiben, eine strömungsabhängige Temperaturänderung T am Sensorelement 1 zu messen und daraus - bei gegebener konstanter, d. h. rechteckförmiger Heizleistung - auf die Flussgeschwindigkeit v oder den Massenstrom zu schliessen. Statt Temperaturen T bei einer fixen Messzeit t können auch strömungsabhängige Schwellwertzeiten $t_s$ bis zum Erreichen eines vorgegebenen Temperaturschwellwerts $T_s$ ausgewertet werden. In Fig. 2b sind beispielhaft zwei zeitabhängige Temperaturverläufe T(t) für zwei Flussgeschwindigkeiten $v_a<v_b$ dargestellt. Fig. 2c zeigt die resultierende Messkurve oder Charakteristik der Temperatur zu einem bestimmten Zeitpunkt als Funktion der Flussgeschwindigkeit T(v), die eine stark abnehmende Messempfindlichkeit für zunehmende Flussgeschwindigkeiten v aufweist. Dadurch werden die Messgenauigkeit und der Messbereich auf sehr unvorteilhafte Weise eingeschränkt. Fig. 2d zeigt das entsprechende, stark nichtlineare Verhalten der thermischen Messung der Schwellwertzeit $t_s$ als Funktion der Flussgeschwindigkeit v. Die nichtlineare $t_s(v)$-Charakteristik hat mehrere Nachteile. Bei kleinen Flussgeschwindigkeiten v ist die Messempfindlichkeit gering. Bei hohen Flussgeschwindigkeiten v kann von der theoretisch hohen Messempfindlichkeit nicht profitiert werden, weil die Schwellwertzeiten $t_s$ nur mit grosser Unsicherheit aus den flachen, schleifenden Schnittpunkten zwischen dem Temperaturanstieg T(t) und der Schwellwerttemperatur $T_s$ bestimmbar sind. Ausserdem ist die Festlegung der Schwellwerttemperatur $T_s$ sehr kritisch. Wenn $T_s$ niedrig gewählt wird, werden die Schwellwertzeiten $t_s$ kurz und entsprechend wird $t_s(v)$ sehr flach und die Messauflösung für kleine v wird schlecht. Wenn $T_s$ hoch gewählt wird, setzt die nichtlineare, überproportionale Zunahme von $t_s(v)$ schon bei kleinen Geschwindigkeiten v ein und zeigt wegen der flachen Schnittpunkte einen steilen Anstieg. Im schlimmsten Fall wird $T_s$ nicht erreicht und die Flussgeschwindigkeit v ist nicht mehr messbar. Auch im zulässigen Messbereich für v ist eine subtile Wahl und gegebenenfalls wiederholte Anpassung von $T_s$ erforderlich, um einen nützlichen Messbereich mit einer auswertbaren Messcharakteristik $t_s(v)$ zu erhalten.

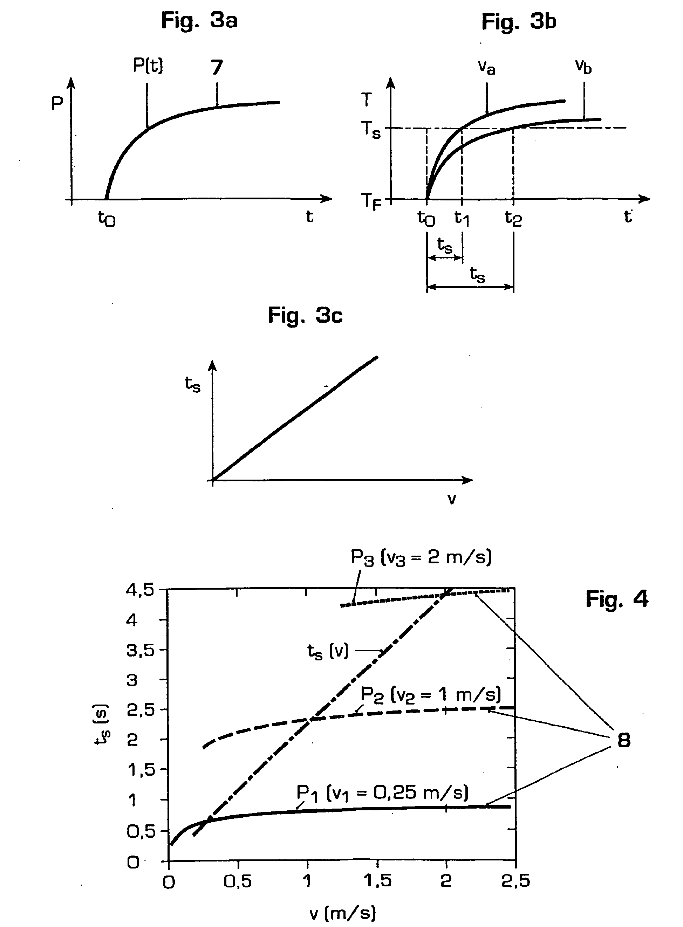

In Fig. 3a-3c wird das erfindungsgemässe Verfahren erläutert. Zum Zeitpunkt $t_0$ wird ein zeitabhängiges und gegebenenfalls vom gewählten Flussgeschwindigkeitsbereich abhängiges Heizleistungssignal P(t) gestartet und gemäss einem nicht rechteckförmigen, sublinearen Anstiegsverhalten P(t) erhöht. Derartige Heizpulse 7 werden dem Heizmittel 1a zumindest von Zeit zu Zeit zugeführt (nicht dargestellt). Bevorzugt werden die strömungsabhängigen Zeiten $t_1$, $t_2$ bis zum Erreichen eines vorgebbaren Temperaturschwellwerts $T_s$ gemessen und daraus die strömungsabhängigen Schwellwertzeiten $t_s=t_1-t_0$ für $v_a$ und $t_s=t_2-t_0$ für $v_b$ bestimmt. Im Gegensatz zu Fig. 2c ist $t_s(v)$ eine monoton steigende Funktion. Aufgrund der erfindungsgemässen Abflachung des Anstiegsverhaltens P(t) kann nun das störende Sättigungsverhalten in T(t) (Fig. 2c) oder das störende nichtlineare Verhalten in $t_s(v)$ (Fig. 2d) weitgehend kompensiert werden und eine über einen weiten Messbereich von Flussgeschwindigkeiten v nützliche, gut auswertbare Messfunktion $t_s(v)$ erhalten werden. Aufgrund des erweiterten Messbereichs ist der Massen- oder Flussgeschwindigkeitssensor besonders zum Messen von Heisswasserbezug im privaten, öffentlichen oder industriellen Bereich geeignet.

Im Folgenden wird eine detailliertere Analyse für eine optimale Gestaltung der Heizleistungspulse 7 gegeben. In einem einfachen thermischen Modell besitzt das Sensorelement 1 eine Wärmekapazität $C_s$, einen ersten thermischen Übergangswiderstand $R_s$ zwischen dem Heizmittel 1a und einer Oberfläche 10 des Sensorelements 1 und einen zweiten thermischen Übergangswiderstand $R_l=(h \cdot A)^{-1}$ zwischen der Oberfläche 10 des Sensorelements 1 und dem Fluid 3, wobei h ein strömungsabhängiger Wärmeübergangskoeffizient zwischen dem Sensorelement 1 und dem Fluid 3 und A eine Kontaktoberfläche zwischen dem Sensorelement 1 und dem Fluid 3 ist. Gemäss VDI-Wärmeatlas (VDI-Richtlinien 3522, VDI-Handbuch Messtechnik I, VDI-Verlag GmbH, Düsseldorf 1987) ist für ein zylinderförmiges, seitlich angeströmtes Sensorelement 1 mit Durchmesser d der Wärmeübergangskoeffizient h gegeben durch die Gleichung

$$ h = (\lambda/d) \cdot 1,11 \cdot C \cdot Pr^{0,31} \cdot Re^m \quad , \qquad (G1) $$

wobei λ eine Wärmeleitfähigkeit des Fluids 3 ist, C ein Parameter und m ein Exponent ist, die beide von einer Reynoldszahl Re des Fluids 3 abhängen, und Pr eine Prandtlzahl des Fluids 3 ist. Mit $Pr=\eta \cdot c_p/\lambda$, wobei η=eine dynamische Viskosität des Fluids 3 und $c_p$=eine spezifische Wärme des Fluids 3, und $Re=\rho \cdot d \cdot v/\eta$, wobei ρ=eine Dichte und v=eine Flussgeschwindigkeit des Fluids 3, ist h proportional zu $v^m$ und es gilt

$$ R_I = \gamma \cdot v^{-m} \quad , \qquad (G2) $$

wobei $\gamma=d/(A \cdot \lambda \cdot 1,11 \cdot C \cdot Pr^{0,31} \cdot (\rho \cdot d/\eta)^m)$ eine Konstante ist. Für die Reynoldszahl-abhängigen Parameter C und m können tabellierte Werte verwendet werden, z. B. C=0,615 und m=0,466 für Reynoldszahlen zwischen 40 und 4000, die einen laminaren Fluss des Fluids 3 charakterisieren.

Im folgenden sei ein numerisches Beispiel für Wasser bei Raumtemperatur angegeben: $\eta=1.10^{-3}$ Ns/m$^2$, ρ=998,2 kg/m$^3$, A=0,598 W/(m·K) und $c_p$=4182 J/(kg·K). Dann ist Pr=6,993 und für d=1,9 mm wird Re=1897.v. Für Geschwindigkeiten v zwischen 0,02 m/s und 2 m/s nehmen die Parameter C und m die Werte C=0,615 und m=0,466 an. Dies führt zu Wärmeübergangskoeffizienten h zwischen 2140 W/(m$^2$•K) bei v=0,02 m/s und 18270 W/(m$^2$•K) bei v=2 m/s und entsprechenden zweiten thermischen Übergangswiderständen $R_I$=6,5 K/W bei v=0,02 m/s und $R_I$=0,7 K/W bei v=2 m/s für ein Sensorelement 1 der Länge l=12 mm.

Mit einem zeitabhängigen und geschwindigkeitsabhängigen Anstiegsverhalten P(t) der Heizleistung gemäss der Gleichung

$$P(t) = P_0 \cdot (1+R_S/R_I)^{-1} \cdot t^{\alpha} \quad , \qquad\qquad (G3)$$

wobei $P_0$=ein Heizleistungsfaktor und $\alpha$=ein Exponent des Anstiegsverhaltens P(t) ist, kann das zuvor genannte nichtlineare, insbesondere überproportionale Verhalten der Messcharakteristik $t_s$(v) näherungsweise kompensiert oder sogar die Messcharakteristik $t_s$(v) zumindest abschnittsweise oder an Stützstellen punktweise linearisiert werden. Insbesondere gilt für Messzeiten oder Schwellwertzeiten $t_s$>$\tau$, insbesondere $t_s$>10•$\tau$, mit $\tau$=$C_S$•$R_S$

$$T(t) = P_0 \cdot t^{\alpha} \cdot R_I + T_F \quad , \qquad\qquad (G4)$$

wobei $T_F$ die ungestörte Fluidtemperatur bezeichnet. Das gleiche Aufwärmverhalten T(t) wird in der Näherung $R_S$<$R_I$, insbesondere $R_S/R_I$<0,1 und besonders bevorzugt $R_S/R_I$<0,01, mit einer geschwindigkeitsunabhängigen Heizpulsleistung P(t) = $P_0 \cdot t^{\alpha}$ erhalten.

Mit einer Wahl des Heizleistungsexponenten $\alpha$=m gilt dann

$$T(t) = P_0 \cdot \gamma \cdot (t/v)^m + T_F \qquad\qquad (G5)$$

und die Schwellwertzeit $t_s$ für einen gegebenen Temperaturschwellwert $T_s$ ist durch die Gleichung

$$t_S(v) = (T_S - T_F)^{1/m} \cdot (P_0 \cdot \gamma)^{-1/m} \cdot v \qquad\qquad (G6)$$

gegeben. Die Messdauer oder Schwellwertzeit $t_s$ ist also eine lineare Funktion der zu bestimmenden Flussgeschwindigkeit v, wie in Fig. 3c dargestellt, wenn der Heizleistungsexponent $\alpha$ gleich dem Geschwindigkeitsexponenten m des Wärmeübergangskoeffizienten h ist und insbesondere wenn der erste thermische Übergangswiderstand $R_S$ des Sensorelements 1 vernachlässigbar klein ist gegenüber dem zweiten thermischen Übergangswiderstand $R_I$ zum Fluid 3. Letztere Bedingung ist erfüllt, wenn $R_S/R_I$<1, vorzugsweise $R_S/R_I$<0,1 und besonders bevorzugt $R_S/R_I$<0,01 ist.

Es wird also mit Vorteil das Anstiegsverhalten P(t) proportional zu $t^m$ gewählt wird, wobei der Exponent m kleiner als 1 gewählt wird, insbesondere m≤0,5 und besonders bevorzugt m=0,466 für eine Reynoldszahl zwischen 40 und 4000. Der Heizleistungsexponent $\alpha$ kann auch nur näherungsweise gleich m gewählt werden, d. h. $\alpha \approx$ m, um die gewünschte, zumindest näherungsweise Kompensation des nichtlinearen Verhaltens von $t_s$(v) bei hohen Flussgeschwindigkeiten v zu erreichen.

Es wird ferner mit Vorteil das Anstiegsverhalten P(t) proportional zu einem zeitunabhängigen Amplitudenfaktor $(1+R_S/R_I)^{-1}$ gewählt.

Im allgemeinen Fall wird die Heizleistung gemäss Gleichung (G3) via $R_I$ auch in Abhängigkeit der zu messenden Flussgeschwindigkeit oder des mutmasslichen Messbereichs der zu messenden Flussgeschwindigkeit v variiert, und zwar so, dass wiederum eine lineare Beziehung zwischen der Schwellwertzeit $t_s$ und der Flussgeschwindigkeit v gegeben ist. Diese lineare Beziehung ist auch dann unabhängig von $R_S$, wenn $R_S$ einen nicht vernachlässigbaren Wert gegenüber $R_I$ annimmt.

In diesem Fall ist dem Messvorgang eine Kalibration und Auswahl einer passenden Kalibrationskurve 8 gemäss Fig. 4 vorgeschaltet. In einem ersten Verfahrensschritt werden diskrete Werte der Flussgeschwindigkeit $v_i$ gewählt und zugehörige Anstiegsverhalten $P_i$(t) der Heizleistung bestimmt, wobei i=1, 2, 3, ... ein Index ist. In einem zweiten Verfahrensschritt werden eine Schar von Kalibrationskurven 8 der Schwellwertzeit $t_s$ als Funktion der Flussgeschwindigkeit v für die Anstiegsverhalten $P_i$(t) bestimmt. In einem dritten Verfahrensschritt wird aufgrund einer zuvor gemessenen Flussgeschwindigkeit oder aufgrund von a priori Information über die mutmassliche Flussgeschwindigkeit eine nach Massgabe einer gewünschten Messgenauigkeit für die Flussgeschwindigkeit v und einer gewünschten Messdauer $t_s$

bevorzugte Kalibrationskurve 8 ausgewählt und zur Bestimmung der Flussgeschwindigkeit v verwendet oder es wird ausgehend von der Kalibrationskurve 8 zum niedrigsten Flussgeschwindigkeitswert $v_{i=1}$ sukzessive aufsteigend zu höheren Flussgeschwindigkeitswerten $v_{i>1}$ oder durch Abschätzung in einem Schritt eine nach Massgabe einer gewünschten Messgenauigkeit für die Flussgeschwindigkeit v und einer gewünschten Messdauer $t_s$ bevorzugte Kalibrationskurve 8 bestimmt und zur Bestimmung der Flussgeschwindigkeit v verwendet.

Dieses stufenweise Vorgehen ist in Fig. 4 für drei Kalibrationskurven 8 gezeigt, die mit drei Heizleistungskurven $P_1(t)$ bei $v_1=0,25$ m/s, $P_2(t)$ bei $v_2=1$ m/s und $P_3(t)$ bei $v_3=2$ m/s gewonnen wurden. Durch die Kalibrationskurven 8 ist zumindest punktweise eine lineare Messcharakteristik $t_s(v)$ gegeben. Dabei wurden typische Werte von $R_s \approx 35$ W/K und $R_l \approx 5$ W/K angenommen. Selbst bei einer solcherart unvorteilhaften Grössenverteilung der thermischen Übergangswiderstände, nämlich $R_s \gg R_l$, kann mit dem erfindungsgemässen Verfahren noch eine genaue und schnelle Messung in einem grossen Flussgeschwindigkeits-Messbereich durchgeführt werden. Prinzipiell können auch mit der Kalibrationskurve zu $v_3=2$ m/s noch sehr kleine Flussgeschwindigkeiten $v<1$ m/s gemessen werden. Durch das erfindungsgemässe Verfahren können jedoch die Messdauer $t_s$ wesentlich verkürzt und der Heizenergiebedarf entsprechend gesenkt werden.

Mit Vorteil werden eine Anzahl und Verteilung der Kalibrationskurven 8 nach Massgabe einer gewünschten Messauflösung und eines gewünschten Messbereichs der Flussgeschwindigkeit v gewählt.

Fig. 1 zeigt die Vorrichtung zur Ausführung des oben dargestellten Verfahrens. Hierbei bezeichnet 2a eine Heizungssteuerung zur Erzeugung von Heizpulsen 7 für das Heizmittel 1a und 2b eine Messeinrichtung zur Auswertung der thermischen Messung und zur Bestimmung einer Flussgeschwindigkeit v oder eines Massenflusses aus einer strömungsabhängigen Schwellwertzeit $t_s$ bis zum Erreichen eines vorgegebenen Temperaturschwellwerts $T_s$ am Sensormittel 1b. Erfindungsgemäss umfasst die Heizungssteuerung 2b Mittel zur Erzeugung einer nichtkonstanten Heizleistung P mit einem im wesentlichen sublinearen Anstiegsverhalten P(t) als Funktion der Zeit t und weist die Steuer- und Auswerteeinheit 2 Mittel zur zumindest teilweisen Kompensation eines nichtlinearen Verhaltens der Schwellwertzeit $t_s$ als Funktion der Flussgeschwindigkeit v auf.

In einem bevorzugten Ausführungsbeispiel umfasst die Steuer- und Auswerteeinheit 2 Hardware und/oder Software zur Erzeugung eines Anstiegsverhaltens P(t) proportional zu $t^m$ und/oder zu einem zeitunabhängigen Amplitudenfaktor $(1+R_S/R_l)^{-1}$. Ferner kann die Steuer- und Auswerteeinheit 2 Kalibrationsmittel 2c zur Ausführung des ersten und zweiten Verfahrenschritts des oben dargestellten Kalibrationsvorgangs aufweisen. Vorzugsweise weist das Sensorelement 1 einen elektrischen Heizdraht 1a, 1b mit einem temperaturabhängigen Widerstand auf, der zugleich als Heizmittel 1a und als Sensormittel 1b betreibbar ist.

Das erfindungsgemässe Verfahren und die Vorrichtung zur Ausführung des Verfahrens sind für beliebige Fluide 3, insbesondere für Flüssigkeiten 3 oder Gase 3, geeignet.

## BEZUGSZEICHENLISTE

| | |
|---|---|
| 1 | Sensorelement |
| 1a | Heizmittel |
| 1b | Sensormittel |
| 2 | Steuer- und Auswerteeinheit |
| 2a | Heizungssteuerung |
| 2b | Messeinrichtung |
| 2c | Kalibrationsmittel |
| 1, 2 | Flussgeschwindigkeitssensor, Massenflusssensor |
| 3 | Fluid; Flüssigkeit, Gas |
| 4 | Strömungsprofil |
| 5 | Strömungskanal, Rohr |
| 6 | rechteckförmiger konstanter Heizpuls (Stand der Technik) |
| 7 | sublinearer nichtkonstanter Heizpuls |
| 8 | Kalibrationskurven |
| 10 | Oberfläche des Sensorelements |
| P | Heizleistung |
| P(t), $P_i(t)$ | Anstiegsverhalten |
| T | Temperatur |
| $T_S$ | Schwellwerttemperatur |
| $T_F$ | ungestörte Fluidtemperatur |
| t | Zeit, Zeitvariable |
| $t_0$, $t_1$, $t_2$ | Zeitpunkte |

$t_s$           Schwellwertzeit

$v, v_i$         Flussgeschwindigkeit

**Patentansprüche**

1. Verfahren zum Messen einer Flussgeschwindigkeit (v) oder eines Massenflusses eines Fluids (3), insbesondere zum Messen von Heisswasserbezug im privaten, öffentlichen oder industriellen Bereich, bei welchem das Fluid (3) über ein Sensorelement (1) geführt wird, welches ein Heizmittel (1a) zur Temperaturänderung und ein Sensormittel (1b) zur Bestimmung seiner Temperatur aufweist, wobei mindestens zeitweise das Heizmittel (1a) mit einer Heizleistung (P) in Form von Heizpulsen betrieben wird und eine strömungsabhängige Schwellwertzeit ($t_s$) bis zum Erreichen eines vorgegebenen Temperaturschwellwerts ($T_s$) am Sensormittel (1b) gemessen wird, **dadurch gekennzeichnet, dass** während zumindest einiger der Heizpulse (7) eine nichtkonstante Heizleistung (P) mit einem im wesentlichen sublinearen Anstiegsverhalten (P(t)) als Funktion der Zeit (t) zur zumindest teilweisen Kompensation eines nichtlinearen Verhaltens der Schwellwertzeit ($t_s$) als Funktion der Flussgeschwindigkeit (v) gewählt wird.

2. Das Verfahren nach Anspruch 1, **dadurch gekennzeichnet, dass** das Anstiegsverhalten (P(t)) als Funktion der Zeit (t) und gegebenenfalls der zu messenden Flussgeschwindigkeit (v) selber so variiert wird, dass die Schwellwertzeit ($t_s$) eine lineare Funktion der Flussgeschwindigkeit (v) zumindest an diskreten Flussgeschwindigkeitswerten ($v_i$) ist.

3. Das Verfahren nach einem der vorangehenden Ansprüche, **dadurch gekennzeichnet, dass** das Anstiegsverhalten (P(t)) proportional zu $t^m$ gewählt wird, wobei m=ein von einer Reynoldszahl des Fluids (3) abhängiger Exponent kleiner als 1 ist, insbesondere $m \leq 0,5$ und besonders bevorzugt m=0,466 für eine Reynoldszahl des Fluids (3) zwischen 40 und 4000.

4. Das Verfahren nach einem der vorangehenden Ansprüche, **dadurch gekennzeichnet, dass** das Anstiegsverhalten (P(t)) proportional zu einem zeitunabhängigen Amplitudenfaktor $(1+R_S/R_I)^{-1}$ gewählt wird, wobei $R_S$=ein erster thermischer Übergangswiderstand zwischen dem Heizmittel (1a) und einer Oberfläche (10) des Sensorelements (1) und $R1=(h \cdot A)^{-1}$ ein zweiter thermischer Übergangswiderstand zwischen der Oberfläche (10) des Sensorelements (1) und dem Fluid (3), wobei h=ein strömungsabhängiger Wärmeübergangskoeffizient zwischen dem Sensorelement (1) und dem Fluid (3) und A=eine Kontaktoberfläche zwischen dem Sensorelement (1) und dem Fluid (3) ist.

5. Das Verfahren nach den Ansprüchen 3 und 4, **dadurch gekennzeichnet, dass** ein zylinderförmiges, von dem Fluid (3) transversal angeströmtes Sensorelement (1) mit einem Wärmeübergangskoeffizienten h proportional zu $v^m$ und mit einem zweiten thermischen Übergangswiderstand $R_I = \gamma \cdot v^{-m}$ mit $\gamma$=eine Konstante gewählt wird.

6. Das Verfahren nach den Ansprüchen 3 und 4, **dadurch gekennzeichnet, dass**

     a) in einem ersten Verfahrensschritt diskrete Werte der Flussgeschwindigkeit ($v_i$) gewählt und zugehöri- ge Anstiegsverhalten $P_i(t)$ der Heizleistung be- stimmt werden, wobei i=1, 2, 3, ... ein Index ist,
     b) in einem zweiten Verfahrensschritt eine Schar von Kalibrationskurven (8) der Schwellwertzeit ($t_s$) als Funktion der Flussgeschwindigkeit (v) für die An- stiegsverhalten ($P_i(t)$) bestimmt werden und
     c) in einem dritten Verfahrensschritt aufgrund einer zuvor gemessenen Flussgeschwindigkeit oder aufgrund von a priori Information über die mutmassliche Flussgeschwindigkeit eine nach Massgabe einer ge- wünschten Messgenauigkeit für die Flussgeschwindig- keit (v) und einer gewünschten Messdauer ($t_s$) be- vorzugte Kalibrationskurve (8) ausgewählt und zur Bestimmung der Flussgeschwindigkeit (v) verwendet wird oder
     d) in einem dritten Verfahrensschritt ausgehend von der Kalibrationskurve (8) zum niedrigsten Fluss- geschwin- digkeitswert ($v_{i=1}$) sukzessive aufsteigend zu höheren Flussgeschwindigkeitswerten ($v_{i>1}$) oder durch Abschätzung in einem Schritt eine nach Mass- gabe einer gewünschten Messgenauigkeit für die Flussgeschwindigkeit (v) und einer gewünschten Messdauer ($t_s$) bevorzugte Kalibrationskurve (8) be- stimmt wird und zur Bestimmung der Flussgeschwin- digkeit (v) verwendet wird.

7. Das Verfahren nach Anspruch 6, **dadurch gekennzeichnet, dass** eine Anzahl und Verteilung der Kalibrationskurven (8) nach Massgabe einer gewünschten Messauflösung und eines gewünschten Messbereichs der Flussgeschwindigkeit (v) gewählt werden.

8. Das Verfahren nach den Ansprüchen 3 und 4, **dadurch gekennzeichnet, dass** $R_S/R_I < 1$, vorzugsweise $R_S/R_I < 0,1$

und besonders bevorzugt $R_S/R_I<0{,}01$, und ein Heizleistungsfaktor $P_0$ gewählt werden und die Schwellwertzeit $(t_s)$ als eine exakt lineare Funktion der Flussgeschwindigkeit (v) gemäss einer Gleichung $t_s(v) = (T_S-T_F)^{1/m} \bullet (P_0 \bullet \gamma)^{-1/m} \bullet v$ berechnet wird, wobei $\gamma$=eine Konstante und $T_F$=eine ungestörte Fluidtemperatur ist.

**9.** Vorrichtung zur Ausführung des Verfahrens nach einem der vorangehenden Ansprüche, umfassend ein Sensorelement (1) mit einem Heizmittel (1a) und einem Sensormittel (1b) zur thermischen Messung in einem Fluid (3) und eine Steuer- und Auswerteeinheit (2) mit einer Heizungssteuerung (2a) zur Erzeugung von Heizpulsen (7) für das Heizmittel (1a) und einer Messeinrichtung (2b) zur Auswertung der thermischen Messung und zur Bestimmung einer Flussgeschwindigkeit (v) oder eines Massenflusses aus einer strömungsabhängigen Schwellwertzeit $(t_s)$ bis zum Erreichen eines vorgegebenen Temperaturschwellwerts $(T_s)$ am Sensormittel (1b), **dadurch gekennzeichnet, dass**

a) die Heizungssteuerung (2b) Mittel zur Erzeugung ei- ner nichtkonstanten Heizleistung (P) mit einem im wesentlichen sublinearen Anstiegsverhalten (P(t)) als Funktion der Zeit (t) umfasst und

b) die Steuer- und Auswerteeinheit (2) Mittel zur zu- mindest teilweisen Kompensation eines nichtlinearen Verhaltens der Schwellwertzeit $(t_s)$ als Funktion der Flussgeschwindigkeit (v) aufweist.

**10.** Vorrichtung nach Anspruch 9, **dadurch gekennzeichnet, dass**

a) die Steuer- und Auswerteeinheit (2) Hardware und/oder Software zur Erzeugung eines Anstiegsver- haltens (P(t)) proportional zu $t^m$ und/oder zu einem zeitunabhängigen Amplitudenfaktor $(1+R_S/R_I)^{-1}$ auf- weist, wobei t=eine Zeitvariable, m=ein von einer Reynoldszahl des Fluids (3) abhängiger Exponent, $R_S$=ein erster thermischer Übergangswiderstand zwi- schen dem Heizmittel (1b) und einer Oberfläche (10) des Sensorelements (1), $R_I=(h \bullet A)^{-1}$ ein zweiter ther- mischer Übergangswiderstand zwischen einer Oberflä- che (10) des Sensorelements (1) und dem Fluid (3), h=ein strömungsabhängiger Wärmeübergangskoeffizient zwischen dem Sensorelement (1) und dem Fluid (3) und A=eine Kontaktoberfläche zwischen dem Sensor- element (1) und dem Fluid (3) ist und/oder

b) die Steuer- und Auswerteeinheit (2) Kalibrations- mittel (2c) zur Ausführung des ersten und zweiten Verfahrenschritts gemäss Anspruch 6 aufweist.

**11.** Vorrichtung nach einem der Ansprüche 9-10, **dadurch gekennzeichnet, dass**

a) das Sensorelement (1) einen elektrischen Heizdraht (1a, 1b) mit einem temperaturabhängigen Widerstand aufweist, der zugleich als Heizmittel (1a) und als Sensormittel (1b) betreibbar ist und/oder

b) das Sensorelement (1) eine Wärmekapazität $C_S$ und einen ersten thermischen Übergangswiderstand $R_S$ zwischen dem Heizmittel (1b) und einer Oberfläche (10) des Sensorelements (1) aufweist, wobei die Schwell- wertzeit oder Messdauer $t_S>C_S \bullet R_S$, insbesondere $t_S>10 \bullet C_S \bullet R_S$, ist und/oder

c) das Sensorelement (1) eine zylindrische Gestalt mit einem Durchmesser (d) hat und bei seitlicher An- strömung durch das Fluid (3) mit der Flussgeschwin- digkeit (v) näherungsweise einen strömungsabhängi- gen Wärme- übergangskoeffizienten $h=\lambda/d \bullet 1{,}11 \bullet C \bullet Pr^{0,31} \bullet Re^m$ aufweist, wobei $\lambda$=eine Wärmeleitfähigkeit des Fluids (3), C=ein Parameter und m=ein Exponent, die von einer Reynoldszahl Re des Fluids (3) abhängen, und Pr=eine Prandtlzahl des Fluids (3).

## Claims

**1.** Method for measuring a flow rate (v) or a mass flow for a fluid (3), particularly for measuring hot water draw in the private, public or industrial sector, in which the fluid (3) is routed via a sensor element (1) which has a heating means (a) for charging temperature and a sensor means (1b) for determining the temperature thereof, wherein at least occasionally the heating means (a) is operated at a heating power (P) in the form of heating pulses and a flow-dependant threshold value time $(t_s)$ up to a prescribed temperature threshold value $(T_s)$ being reached on the sensor means (1b) is measured, **characterized in that** during at least some of the heating pulses (7) a non-constant heating power (P) with an essentially sub-linear rise response (P(t)) as a function of time (t) is chosen to at least partially compensate for a non-linear response in the threshold value time $(t_s)$ as a function of the flow rate (v).

**2.** Method according to Claim 1, **characterized in that** the rise response (P(t)) as a function of time (t) and possibly of the flow rate (v) that is to be measured itself is varied such that the threshold value time $(t_s)$ is a linear function of the flow rate (v) at least at discrete flow rate values $(v_i)$.

3. Method according to one of the preceding claims, characterise in that the rise response (P(t)) is chosen to be proportional to $t^m$, wherein m is an exponent which is dependent on a Reynolds number for the fluid (3) - less than 1, particularly m=0.5 and particularly preferably m=0.466, for a Reynolds number for the fluid (3) between 40 and 4000.

4. Method according to one of the preceding claims, **characterized in that** the rise response (P(t)) is chosen to be proportional to a time-independent amplitude factor $(1+R_S/R_I)^{-1}$, wherein $R_S$ is a first thermal contact resistance between the heating means (1a) and a surface (10) of the sensor element (1) and $R_I= (h \cdot A)^{-1}$ is a second thermal contact resistance between the surface (10) of the sensor element (1) and the fluid (3), wherein h is a flow-dependent heat transfer coefficient between the sensor element (1) and the fluid (3) and A is a contact surface between the sensor element (1) and the fluid (3).

5. Method according to Claims 3 and 4, **characterized in that** a cylindrical sensor element (1) to which the fluid (3) flows transversally is chosen to have a heat transfer coefficient h proportional to $v^m$ and to have a second thermal contact resistance $R_I=\gamma \cdot v^{-m}$, where $\gamma$ is a constant.

6. Method according to Claims 3 and 4, **characterized in that**

   a) a first method step involves discrete values for the flow rate $(v_i)$ being chosen and associated rise responses $P_i(t)$ for the heating power being determined, wherein i=1, 2, 3 ... is an index,
   b) a second method step involves a group of calibration curves (8) for the threshold value time $(t_s)$ as a function of the flow rate (v) being determined for the rise response $(P_i(t))$ and
   c) a third method step involves a previously measured flow rate or a priori information about the supposed flow rate being taken as a basis for selecting a calibration curve (8) which is preferred according to a desired measurement accuracy for the flow rate (v) and a desired measurement period $(t_s)$ and said calibration curve being used to determine the flow rate (3), or
   d) a third method step involves the calibration curve (8) for the lowest flow rate value $(v_{i=1})$, gradually rising to higher flow rate values $(v_{i>1})$, or estimation in one step, being used to determine a calibration curve (8) which is preferred according to a desired measurement accuracy for the flow rate (v) and a desired measurement period $(t_s)$ and said calibration curve being used to determine the flow rate (v).

7. Method according to Claim 6, **characterized in that** a number and distribution for the calibration curves (8) are chosen according to a desired measurement resolution and a desired measurement range for the flow rate (v).

8. Method according to Claims 3 and 4, **characterized in that** $R_S/R_I<1$, preferably $R_S/R_I<0.1$ and particularly preferably $R_S/R_I<0.01$, and a heating power factor $P_0$ are chosen and the threshold value time $(t_s)$ is calculated as an exactly linear function of the flow rate (v) according to an equation
$t_s(v) = (T_S-T_F)^{1/m} \cdot (P_0 \cdot \gamma)^{-1/m} \cdot v$, wherein $\gamma$ is a constant and $T_F$ is an undisturbed fluid temperature.

9. Apparatus for carrying out the method according to one of the preceding claims, comprising a sensor element (1) having a heating means (1a) and a sensor means (1b) for thermal measurement in a fluid (3) and comprising a control and evaluation unit (2) having a heating controller (2a) for producing heating pulses (7) for the heating means (1a) and a measuring device (2b) for evaluating the thermal measurement and for determining a flow rate (3) or a mass flow from a flow-dependent threshold value time $(t_s)$ up to a prescribed temperature threshold value $(T_S)$ being reached on the sensor means (1b), **characterized in that**

   a) the heating controller (2b) comprises means for producing a non-constant heating power (P) with an essentially sub-linear rise response (P(t)) as a function of time (t), and
   b) the control and evaluation unit (2) has means for at least partially compensating for a non-linear response in a threshold value time $(t_s)$ as a function of the flow rate (v).

10. Apparatus according to Claim 9, **characterized in that**

   a) the control and evaluation unit (2) has hardware and/or software for producing a rise response (P(t)) proportional to $t^m$ and/or to a time-independent amplitude factor $(1+R_S/R_I)^{-1}$, wherein t is a time variable, m is an exponent which is dependent on a Reynolds number for the fluid (3), $R_S$ is a first thermal contact resistance between the heating means (1b) and a surface (10) of the sensor element (1), $R_I= (h \cdot A)^{-1}$ is a second thermal contact resistance between a surface (10) of the sensor element (1) and the fluid (3), h is a flow-dependent heat transfer coefficient between the sensor element (1) and the fluid (3), and A is a contact surface between the sensor element (1) and the fluid (3), and/or
b) the control and evaluation unit (2) has calibration means (2c) for carrying out the first and second method steps according to Claim 6.

**11.** Apparatus according to one of Claims 9-10, **characterized in that**

a) the sensor element (1) has an electric heating wire (1a, 1b) having a temperature-dependent resistance which can be operated both as a heating means (1a) and as a sensor means (1b), and/or
b) the sensor element (1) has a thermal capacitance $C_s$ and a first thermal contact resistance $R_s$ between the heating means (1b) and a surface (10) of the sensor element (1), wherein the threshold value time or measurement period is $t_s > C_S \cdot R_S$, particularly $t_s > 10 \cdot C_S \cdot R_S$, and/or
c) the sensor element (1) has a cylindrical shape with a diameter (d) and, when flowed against laterally by the fluid (3) at the flow rate (v), approximately has a flow-dependent heat transfer coefficient of $h = \lambda/d \cdot 1$, $11 \cdot C \cdot Pr^{0.31} \cdot Re^m$, wherein $\lambda$ is a thermal conductivity for the fluid (3), C is a parameter and m is an exponent which are dependent on a Reynolds number Re for the fluid (3), and Pr is a Prandtl number for the fluid (3).

## Revendications

**1.** Procédé de mesure d'une vitesse d'écoulement (v) ou d'un débit massique d'un fluide (3), notamment pour mesurer la perception d'eau chaude dans une zone privée, publique ou industrielle, procédé selon lequel le fluide (3) est guidé sur un élément de détection (1) qui présente des moyens de chauffage (1a) pour modifier la température et des moyens de détection (1b) pour déterminer sa température, procédé selon lequel les moyens de chauffage (1a) ponctionnent au moins périodiquement avec une puissance de chauffage (P) sous la forme d'impulsions de chauffage et un temps de valeur de seuil ($t_s$) dépendant de l'écoulement jusqu'à ce qu'une valeur de seuil de température ($T_s$) prédéfinie soit atteinte au niveau des moyens de détection (1b) est mesuré, **caractérisé en ce que** pendant au moins quelques-unes des impulsions de chauffage (7), une puissance de chauffage (P) non constante ayant un comportement de croissance (P(t)) en tant que fonction du temps (t) essentiellement sublinéaire est choisie en vue de la compensation au moins partielle d'un comportement non linéaire du temps de valeur de seuil ($t_s$) en tant que fonction de la vitesse d'écoulement (v).

**2.** Procédé selon la revendication 1, **caractérisé en ce que** le comportement de croissance (P(t)) en tant que fonction du temps (t) et éventuellement la vitesse d'écoulement (v) à mesurer elle-même est modifié de telle sorte que le temps de valeur de seuil ($t_s$) est une fonction linéaire de la vitesse d'écoulement (v) au moins aux valeurs discrètes de la vitesse d'écoulement ($v_i$).

**3.** Procédé selon l'une des revendications précédentes, **caractérisé en ce que** le comportement de croissance (P(t)) est choisi proportionnel à $t^m$, m désignant ici un exposant inférieur à 1 qui dépend d'un nombre de Reynold du fluide (3), notamment m = 0,5 et notamment de préférence m 0,466 pour un nombre de Reynold du fluide (3) compris entre 40 et 4000.

**4.** Procédé selon l'une des revendications précédentes, **caractérisé en ce que** le comportement de croissance (P(t)) est choisi proportionnel un facteur d'amplitude $(1+R_S/R_l)^{-1}$ indépendant du temps, $R_S$ désignant ici une première résistance de transfert thermique entre les moyens de chauffage (1a) et une surface (10) de l'élément de détection (1) et $R_l = (h*A)^{-1}$ une deuxième résistance de transfert thermique entre la surface (10) de l'élément de détection (1) et le fluide (3), h désignant un coefficient de transfert thermique entre l'élément de détection (1) et le fluide (3) qui dépend de l'écoulement et A une surface de contact entre l'élément de détection (1) et le fluide (3).

**5.** Procédé selon les revendications 3 et 4, **caractérisé par** le choix d'un élément de détection (1) de forme cylindrique, traversé dans le sens transversal par le fluide (3), avec un coefficient de transfert thermique h proportionnel à $v^m$ et avec une deuxième résistance de transfert thermique $R_l = y*v^{-m}$, $\gamma$ étant une constante.

**6.** Procédé selon les revendications 3 et 4, **caractérisé en ce que**

a) dans une première étape du procédé, des valeurs discrètes de la vitesse d'écoulement ($v_i$) sont choisies et le comportement de croissance Pi(t) correspondant de la puissance de chauffage est déterminé, i = 1, 2, 3, ... étant un index,
b) dans une deuxième étape du procédé, une famille de courbes de calibrage (8) du temps de valeur de seuil

($t_s$) est déterminée en tant que fonction de la vitesse d'écoulement (v) pour le comportement de croissance Pi(t) et

c) dans une troisième étape du procédé, en se basant sur une vitesse d'écoulement mesurée précédemment ou en se basant sur une information approximative sur la vitesse d'écoulement probable, une courbe de calibrage (8) préférentielle est choisie d'après l'indication d'une précision de mesure souhaitée pour la vitesse d'écoulement (v) et d'une durée de mesure ($t_s$) souhaitée puis utilisée pour la détermination de la vitesse d'écoulement (v) ou

d) dans une troisième étape du procédé, en partant de la courbe de calibrage (8) pour la vitesse d'écoulement la plus faible ($v_{i=1}$) croissant successivement jusqu'aux valeurs plus élevées de la vitesse d'écoulement ($v_{i>1}$) ou par estimation dans une étape, une courbe de calibrage (8) préférentielle est choisie d'après l'indication d'une précision de mesure souhaitée pour la vitesse d'écoulement (v) et d'une durée de mesure ($t_s$) souhaitée puis utilisée pour la détermination de la vitesse d'écoulement (v).

7. Procédé selon la revendication 6, **caractérisé en ce qu'**un nombre donné et une distribution des courbes de calibrage (8) sont choisis d'après l'indication d'une précision de mesure souhaitée et d'une plage de mesure souhaitée pour la vitesse d'écoulement (v).

8. Procédé selon l'une des revendications 3 et 4, **caractérisé en ce** $R_S/R_I<_1$, de préférence $R_S/R_I<0,1$ et notamment de préférence $R_S/R_I<0,01$ ainsi qu'un facteur de puissance de chauffage $P_0$ sont sélectionnés et le temps de valeur de seuil ($t_s$) est calculé sous la forme d'une fonction exactement linéaire de la vitesse d'écoulement conformément à une équation ts(v) $=(T_S - T_F)^{1/m*} (P_0*\gamma)^{-1/m0*}v$, $\gamma$ désignant une constante et $T_F$ désignant une température non perturbée du fluide.

9. Dispositif pour mettre en oeuvre le procédé selon l'une des revendications précédentes, comprenant un élément de détection (1) avec des moyens de chauffage (1a) et des moyens de détection (1b) pour la mesure thermique dans un fluide (3) ainsi qu'une unité de commande et d'interprétation (2) avec une commande de chauffage (2a) pour générer des impulsions de chauffage (7) pour les moyens de chauffage (1a) et un dispositif de mesure (2b) pour interpréter la mesure thermique et pour déterminer une vitesse d'écoulement (v) ou un débit massique à partir d'un temps de valeur de seuil ($t_s$) dépendant de l'écoulement jusqu'à ce qu'une valeur de seuil de température ($T_S$) prédéfinie soit atteinte au niveau des moyens de détection (1b), **caractérisé en ce que**

a) la commande de chauffage (2b) comprend des moyens pour générer une puissance de chauffage (P) non constante ayant un comportement de croissance (P(t)) en tant que fonction du temps (t) essentiellement sublinéaire et

b) l'unité de commande et d'interprétation (2) présente des moyens pour compenser au moins partiellement un comportement non linéaire du temps de valeur de seuil ($t_s$) en tant que fonction de la vitesse d'écoulement (v).

10. Dispositif selon la revendication 9, **caractérisé en ce que**

a) l'unité de commande et d'interprétation (2) présente un matériel et/ou un logiciel pour générer un comportement de croissance (P(t)) proportionnel à $t^m$ et/ou à un facteur d'amplitude $(1+R_S/R_I)^{-1}$ indépendant du temps, t désignant ici une variable de temps, m un exposant qui dépend d'un nombre de Reynold du fluide (3), $R_S$ une première résistance de transfert thermique entre les moyens de chauffage (1a) et une surface (10) de l'élément de détection (1), $R_I = (h*A)^{-1}$ une deuxième résistance de transfert thermique entre la surface (10) de l'élément de détection (1) et le fluide (3), h un coefficient de transfert thermique entre l'élément de détection (1) et le fluide (3) qui dépend de l'écoulement et A une surface de contact entre l'élément de détection (1) et le fluide (3) et/ou

b) l'unité de commande et d'interprétation (2) présente des moyens de calibrage (2c) pour exécuter la première et la deuxième étape du procédé selon la revendication 6.

11. Dispositif selon l'une des revendications 9-10, **caractérisé en ce que**

a) l'élément de détection (1) présente un fil chauffant électrique (1a, 1b) avec une résistance dépendante de la température, lequel peut être utilisé en même temps en tant que moyens de chauffage (1a) et en tant que moyens de détection (1b) et/ou

b) l'élément de détection (1) présente une capacité thermique $C_S$ et une première résistance de transfert thermique $R_S$ entre les moyens de chauffage (1b) et une surface (10) de l'élément de détection (1), le temps de valeur de seuil ou la durée de mesure étant $t_s C_S*R_S$, notamment $t_s>10*C_S*R_S$ et/ou

c) l'élément de détection (1) possède une forme cylindrique avec un diamètre (d) et, lorsqu'il est traversé latéralement par le fluide (3) avec la vitesse d'écoulement (v), il présente approximativement un coefficient de transfert thermique dépendant de l'écoulement h = $\lambda/d*1$, $11*C*Pr^{0.31}*Re^{m}$, $\lambda$ désignant ici une conductivité thermique du fluide (3), C un paramètre et m un exposant qui dépendent d'un nombre de Reynold Re du fluide (3) et Pr un nombre de Prandtl du fluide (3).

**5**   **3**   **10**   **1, 1a, 1b**

**Fig. 1**

v

d

l

**4**

**2**

**2a**   **2b**   **2c**

**6**   **Fig. 2a**

P

t

**Fig. 2b**

T

$v_a$   $v_b$

t

**Fig. 2c**

T

v

**Fig. 2d**

$t_s$

v

**Fig. 3a**

P
P(t)   7

t₀   t

**Fig. 3b**

T
vₐ   v_b
Tₛ
T_F
t₀  t₁   t₂   t
tₛ
tₛ

**Fig. 3c**

tₛ

v

P₃ (v₃ = 2 m/s)

4,5
4
3,5
3
2,5
2
1,5
1
0,5
0

tₛ (v)

P₂ (v₂ = 1 m/s)

P₁ (v₁ = 0,25 m/s)

8

**Fig. 4**

0   0,5   1   1,5   2   2,5

v (m/s)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4501145 A
- EP 0180974 A
- EP 0698786 A

**In der Beschreibung aufgeführte Nicht-Patentliteratur**

- VDI-Richtlinien 3522, VDI-Handbuch Messtechnik I. VDI-Verlag GmbH, 1987